# EUROPEAN PATENT APPLICATION

(11) **EP 0 536 102 A1**
(43) Date of publication of application: **07.04.1993**
(21) Application number: 92850229.3
(22) Date of filing: 28.09.1992
(51) Int. Cl.: B32B 3/04, B32B 27/06, B65D 65/40

(54) **Method for producing a multilayer combination packaging foil and a multilayer combination packaging foil produced according to the method**

(30) Priority: 01.10.1991 FI 914614
(71) Applicant: MÄKILAAKSO OY, SF-02270 Espoo (FI)
(72) Inventor: Mäkilaakso, Antero, SF-02270 Espoo (FI)
(74) Representative: Halldin, Bo

(57) **Abstract**

A method for producing a multilayer combination packaging foil to be used in the packages of food products and similar consumables, said multilayer combination packaging foil being fabricated from two superimposed multilayer foil strips (1...3; 4...6) incorporating one or several barrier layers (2, 5), said strips being joined to each other preferably using compressive heat-sealing. The method according to the invention is implemented by folding at least one side edge (7) of the first multilayer foil strip (4...6) toward the corresponding edge (10) of the second multilayer foil strip (1...3), either abutting said edge or leaving a small gap between the edges.

## Description

The present invention concerns a method for producing a multilayer combination packaging foil for use in the packages of food products and similar consumables, said multilayer combination packaging foil being formed by two superimposed multilayer foil strips, each of the foil strips having one or more barrier layers, said foil strips being joined together, preferably using hot sealing. Furthermore, the invention concerns a multilayer combination packaging foil produced according to the method.

Preservation of foods and similar consumables conventionally uses closed or lined containers fabricated in some way from foils provided with barrier layers. A most general group of foil packages is formed by, e.g., tubular containers in which the foil itself also forms the stiffening structure. The purpose of the barrier layer, e.g., a metallic aluminium layer, is to act as a protective layer which prevents substances present in the environment from penetrating the container, and vice versa.

Because most metals corrode, they must be prevented from contacting the material to be preserved, and moreover, the metal surface must be protected. The protective layer is generally applied using a plastic or protective lacquer film, applied on, for instance, an aluminium foil during the manufacture of the container. Due to reasons related to colour adherence, printability and other similarfactors, some kind of protective coating is applied on both sides of the foil. Known in the art are several different methods and materials for producing the foil including, for instance, those disclosed in the FI patent applications 820247 and 821686 and the US patent 3,817,427.

Most foil manufacturing methods are based on applying a low-cost and soft plastic material, which most generally is polyethene, in a sufficiently thick layer on a metal foil. The protective layer must have sufficient thickness to be compatible, i.a., with the used sealing techniques in order to assure the presence of a sufficient quantity of the sealant in heat-sealing. A reason for the lack of technical advancement in field has been the low cost of basic plastics. General opinion in the art has assumed a thick and easily meltable plastic layer to be necessary in the heat-sealing of the container in order to achieve sufficient seam strength and stiffness of the laminated foil.

In many packages such as collapsible tubular containers, the nonrecovering character of a collapsed container made of a laminated foil is important. The only way to achieve this property in containers fabricated from a laminated foil with a single metallic barrier foil is to make the barrier foil unduly thick to ensure its nonrecovering behaviour under the elastic forces imposed by the plastic layers.

Known in the prior art are foils based on a laminated sandwich structure having several barrier or strength-imparting layers. Such laminated foils are disclosed in, for instance, the German patent application publications DE-OS 30 24 725 and DE-OS 31 13 428. These inventions are, however, related to self- supporting foils with a particularly high stiffness, whose manufacturing method is cumbersome and based on laminating a multilayer structure layer by layer. Such foils are unsuitable for the fabrication and mass production processes of packages in which the multilayer foil material must be folded and sealed using, for instance, heat-sealing. The inventions do not aim at material savings, but instead, at improvements in the strength of materials used.

Conventional structures are also plagued by problems arising from the edge remaining within the container to be fabricated, since in most cases the edge of the barrier layer should not make contact wit h the perishable material to be preserved. Attempts to solve this problem have been made by the excess use of the flowing plastic material in the heat-sealed seams and by "concealment" of the edge under a folded seam. The first approach is unreliable and necessitates the use of yet thicker plastic foils, while the second approach is more applicable requiring, however, special preparations prior to sealing.

The FI patent 68028 solves the above-described problems by using a packaging foil formed from a plastic base material by adhesive joining, then folding the foil over and finally seaming it into a barrier-layer- containing blank, whose one side is coated with a plastic layer intended for the protection of the inside and outside surfaces and the other side is coated with a plastic layer intended for sealing and separa- tion/isolation of the barrier layers.

Such foil structures have several drawbacks. For instance, the inside and outside of the final package must necessarily be of the same material and have identical layer thicknesses. Forthe same reason, the two barrier layers of the foil structure must be of the same material because they are fabricated from the same blank. Furthermore, the method is applicable only to the fabrication of a single packaging foil strip blank at a time.

The FI patent application 893,819 filed earlier by the applicant of this patent discloses a method for producing a multilayer packaging foil to be used in the packages of food products and similar consumables, the base material of the packaging foil being formed by a multilayer foil strip of a laminated arterial with one or several barrier layers. In the method, the multilayer packaging foil is formed from two superimposed multilayer foil strips, in which at least one edge of a first multilayer foil strip is folded over about the corresponding edge of a second multilayer foil strip and the strips are heat-sealed for at least the parts projecting above the plane of the superimposed foils.

Such a method facilitates the use of barrier layers of different materials in the same laminated mul- tilayerfoil. Moreover, the materials of the other plastic layers of the foil can be chosen as most appropriate for t he use of the foil. The plastic material for t he outside layer in the final product, for instance, is conventionally of a high-grade plastic thus allowing the attractive appearance of the package to be achieved by printing of desired patterns and symbols. Nevertheless, the inside of the same package can at the same time be made of a lower-cost material, which still provides resistance to different forms of attack by the contained product such as chemical attack. Another extremely significant advantage is that only one of the two multilayer foils (namely, the foil forming the final outside) must be printed with the desired patterns symbols. In prior art technology, the entire blank had to be printed at equidistant spacings, which necessitated the use of an unnecessarily wide printing machine.

All above-mentioned benefits have been attained in practice, which proves the advantages of the method; yet leaving one problem caused by the occurrence of disadvantageous stresses in the packaging foil from the folding-over of the foil edges and subsequent compressive hot-sealing necessary to flatten the foil edges level with the rest of the foil.

This problem has urged the inventor to find an improved approach yet retaining the benefits described above achievable by way of the method disclosed in the FI patent application 893,819. This effort now results in an invention characterized in that at least one side edge of a first multilayer foil strip is folded toward the corresponding edge of a second multilayer foil strip, either to touch said edge or leaving a small gap between the adjacent edges.

One embodiment of the method according to the present invention, said method being characterized in that said first multilayer foil strip is wider than said second multilayer foil strip, is characterized in that both side edges of the wider foil strip are folded toward the corresponding edges of the narrower foil strip.

The multilayer combination packaging foil produced by way of the method according to the present invention for use in the packages of food products and similar consumables, said multilayer combination packaging foil being formed by two superimposed multilayer foil strips, each of the multilayer foil strips having one or more barrier layers, said foil strips being joined together, preferably using hot sealing, so as to form a multilayer combination packaging foil, said combination foil being characterized in that during its production at least one side edge of a first multilayer foil strip is folded toward the corresponding edge of a second multilayer foil strip, either to touch said edge or leaving a small gap between the adjacent edges.

With respect to the implementation of the method disclosed in the FI patent application 893,819, all equivalent benefits are attained, with the additional benefit of achieving a packaging foil disposing with the need for compressive steps in its fabrication.

In the following, the invention will be examined in more detail by means of the preferred exemplifying embodiments with reference to the attached drawing, in which
Fig. 1 shows in an end view two superimposed foil strips used for producing the combination packaging foil in accordance with the invention.
Fig. 2 shows the same elements as Fig. 1 in a situation in which the foil strips are superimposed and the side edges of the lower foil strip are folded toward the side edges of the upper strip.
Fig. 3 shows a cross section of a tubular container fabricated from the multilayer combination foil.

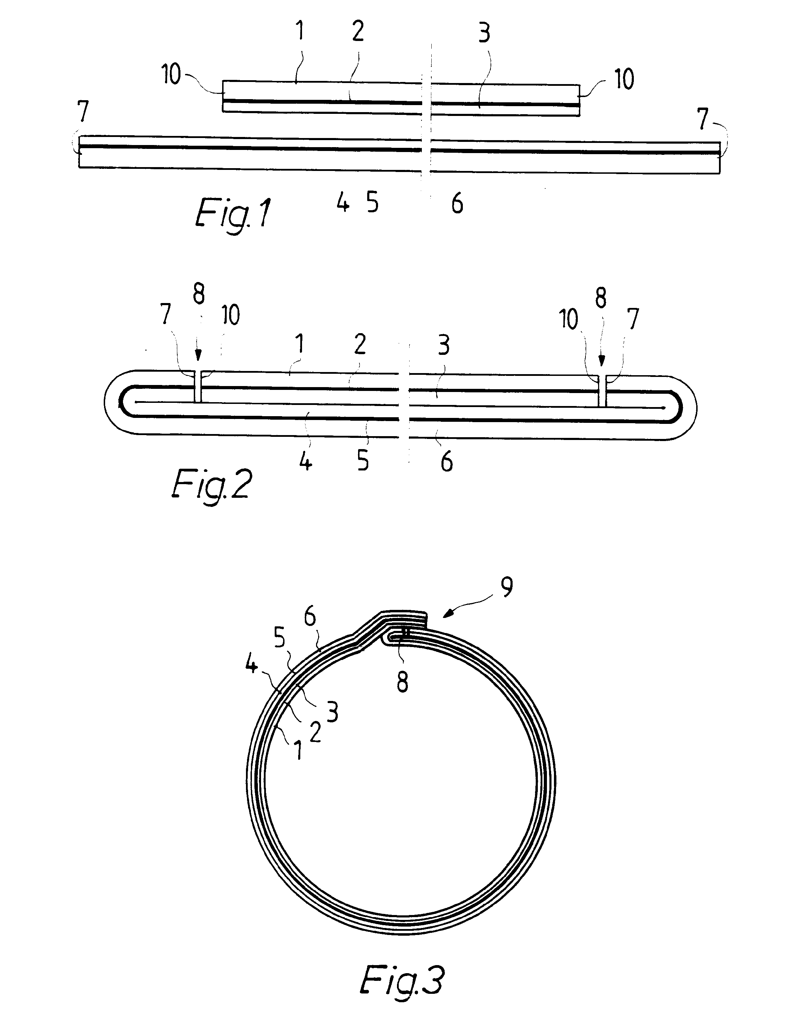

Illustrated in Fig. 1 are two multilayer foils, each of which can have a conventional structure. In practice this means that barrier layers 2, 5 are advantageously fabricated from an aluminium foil. The foil layers 1, 3, 4 and 6 enclosing the barrier layers can be of a suitable plastic. There is no need for the upper and lower foil strips to have identical compositions, but instead, the materials can be selected in a desired manner as long as the selection allows the material designated with number 1 to form the outside of the final package and the material designated with number 6 to form the inside of the final package which comes in contact with the product to be packaged in the container.

The embodiment illustrated in Fig. 1 has the lower foil strip arranged to be wider than the upper foil strip and aligned to extend symmetrically over the edges 10 of the upper foil strip. An essential characteristic of the invention dictates that at least one of overlapping edges is arranged as shown in Fig. 1, while the symmetrical arrangement shown in the Fig. 1 makes it possible to produce two multilayer packaging foils in a single run, thus making the illustrated arrangement a preferred embodiment in terms of producibility. When viewing the illustrated cross-section, the foils must be understood to extend in a plane perpendicular to the plane of the drawing as continuous strips or strips with a definite length. For the purpose of greater clarity, the proportions of the multilayer strips shown in Figs. 1...3 are appreciably exaggerated. In reality, the thicknesses of foil strips with the dimensions shown in the figures will be a fraction of that illustrated.

Illustrated in Fig. 2 is a later stage of the foil fabrication method in accordance with the invention, in which stage the side edges of the lower, wider multilayer foil strip are folded 180° inward so as to make the folded side edges to face the side edges 10 of the upper foil strip. The folding operation can be performed with high accuracy so as to make the side edges 7 and 10 to abut, or alternatively, leaving a small gap 8 between them. When fabricating, e.g., toothpaste squeeze tubes or similar tubular containers, the gap width can be in the order of 0.5 mm, while wide variations in the gap width are tolerated. Correspondingly, the folded part of the side edge can have a width of approx. 1...2 mm. Subsequent to the folding of the foil strips in the manner shown in Fig. 2 (or alternatively, in conjunction with the folding phase), the edges can be compressively heat-sealed, thus achieving a multilayer combination packaging foil blank with a solid structure.

The multilayer combination foil structure produced in the above-described manner can be machined into two essentially identical multilayer packaging foil blanks by slitting the seamed foil at its center. Each of the multilayer packaging foil blanks thus produced has one edge folded in accordance with the invention. In the finished package this edge will be kept to the inside of the package, thus avoiding the possibility of contact of aluminium or similar material of the barrier layer with the packaged product.

Fig. 3 shows a cross section of a packaging foil blank bent into tubular form. The overlapping seam 9 thus formed is finally heat-sealed (the situation illustrated in Fig. 3 precedes the heat-sealing phase) so as to achieve a smooth and leak-proof seam 9. During the compressive heat-sealing phase, the plastic material of layer 1 and the layers 4, 6 melts, thereby flowing into the gap 8 and finally filling it entirely so as to leave no gap in the finished product.

To those versed in the art it is evident that the scope of the invention is not exhausted by the exemplifying embodiments described above; instead, the invention can be varied within the disclosed claims. For instance, in principle the method can be implemented in an alternative manner in which one side edge of the first multilayer foil strip is folded toward the corresponding edge of the second multilayer foil strip and the opposite edge of the second multilayer foil is respectively folded toward the other edge of said first multilayer foil strip. The invention can be applied extremely advantageously to the fabrication of, e.g., toothpaste squeeze tubes or similar containers.

## Claims

1. A method for producing a multilayer combination packaging foil to be used in the packages of food products and similar consumables, said multilayer combination packaging foil being fabricated from two superimposed multilayer foil strips (1...3; 4...6) incorporating one or several barrier layers (2, 5), said strips being joined to each other preferably using compressive heat-sealing, characterized in that at least one side edge (7) of the first multilayer foil strip (4...6) is folded toward the corresponding edge (10) of the second multilayer foil strip (1...3), either abutting said edge or leaving a small gap between the edges. 2. A method as defined in claim 1, in which method the first multilayer foil strip (4...6) is wider than the second multilayer foil strip (1...3), characterized in that both side edges (7) of the wider strip (4...6) are folded toward the corresponding edges (10) of the narrower strip (1...3).

3. A multilayer combination packaging foil intended for the packaging of food products and similar consumables, said packaging foil being fabricated from two superimposed multilayer foil strips (1...3; 4...6) incorporating one or several barrier layers (2,5), said strips being joined to each other preferably using compressive heat-sealing in order to form a multilayer packaging foil, characterized in that at least one side edge (7) of the first multilayer foil strip (4...6) is folded toward the corresponding edge (10) of the second multilayer foil strip (1...3), either abutting said edge or leaving a small gap between the edges.
